# EUROPÄISCHE PATENTSCHRIFT

(11) **EP 4 081 733 B1**
(45) Veröffentlichungstag und Bekanntmachung des Hinweises auf die Patenterteilung: **29.01.2025**
(21) Anmeldenummer: 20838971.8
(22) Anmeldetag: 18.12.2020
(51) Int. Cl.: G02B 5/04, G02B 6/00, G02B 19/00, E06B 3/67

(54) **FLÄCHENVERBUNDELEMENT ZUR LICHTLENKUNG**
COMPOSITE PANEL ELEMENT FOR GUIDING LIGHT
ÉLÉMENT DE PANNEAU COMPOSITE POUR GUIDER LA LUMIÈRE

(30) Priorität: 23.12.2019 DE 102019135712
(43) Veröffentlichungstag der Anmeldung: 02.11.2022
(73) Patentinhaber: temicon GmbH, 44263 Dortmund (DE)
(72) Erfinder: HUMBACH, Oliver, 44388 Dortmund (DE)
(74) Vertreter: Kalkoff & Partner Patentanwälte mbB
(86) Internationale Anmeldenummer: PCT/EP2020/087231
(87) Internationale Veröffentlichungsnummer: WO 2021/130135

(56) Entgegenhaltungen:
- WO-A1-02/16977
- DE-A1- 19 622 670
- DE-C2- 19 622 670
- US-A1- 2002 159 154

## Beschreibung

Die Erfindung betrifft ein Flächenverbundelement zur Lichtlenkung, ein Fenster mit einem solchen Flächenverbundelement sowie ein Verfahren zur Herstellung eines solchen Flächenverbundelements.

Flächenverbundelemente zur Lichtlenkung sind in vielfältiger Ausgestaltung aus dem Stand der Technik bekannt. Beispielsweise zeigt die WO 2013/012865 A2 Substrate mit Schichten zur Lichtlenkung, die als Fensterscheiben gebildet sein können. Um eine solche Lichtlenkung zu erreichen, weisen die Flächenverbundelemente häufig im Inneren luftgefüllte Strukturen auf, um eine Totalreflektion zu ermöglichen.

Dabei besteht ein deutliches Bedürfnis nach hochwertigen Flächenelementen zur Lichtlenkung: Die elektrische Beleuchtung von Gebäuden trägt erheblich zum weltweiten Energieverbrauch bei. Je nach Region werden 10 - 20 % der Energie eines Gewerbegebäudes für die Beleuchtung aufgewendet. Eine effizientere Nutzung des Tageslichtes ist daher von großem Interesse und führt zu einer signifikanten Energieeinsparung. Zudem werden mit dem natürlichen Tageslicht das Wohlbefinden, die Gesundheit und die Produktivität der Menschen gefördert.

Zahlreiche aus dem Stand der Technik bekannte Flächenverbundelemente haben jedoch die Nachteile, dass diese aufgrund der enthaltenen luftgefüllten Strukturen nicht vollständig transparent sind, sondern lediglich diffus durchsichtig. Zudem führt ein unpräziser Aufbau der Flächenverbundelemente häufig zu einem abweichenden optischen Verhalten in verschiedenen Bereichen des Flächenverbundelements. Schließlich werden die Flächenverbundelemente des Standes der Technik häufig aus mehreren, miteinander verklebten Schichten gebildet, wodurch es durch den Klebstoff selber sowie durch Schwankungen der Dicke der Klebstoffschicht weiterhin zu unerwünschten optischen Störungen kommt.

Die US 2002 / 159 154 A1 offenbart eine optische Komponente bestehend aus zwei transparenten flachen Körpern, die jeweils Vertiefungen oder andere Oberflächenmerkmale auf einer ihrer Seiten aufweisen, die sich gegenseitig durchdringen, wenn die beiden Körper einander gegenüberliegend angeordnet werden. Die Formen der Vertiefungen oder anderer Oberflächenmerkmale sind derart gewählt, dass sie sich an einigen Positionen berühren und an anderen Positionen voneinander beabstandet sind, um Hohlräume innerhalb des Verbundkörpers zu bilden. Diese Hohlräume führen zu einer totalen internen Reflexion von einfallendem Licht unter bestimmten Winkeln. Dabei können Verbundkörper, die aus zwei gegenüberliegend angeordneten optischen Komponenten gebildet sind, als Tageslichtschirme verwendet werden, um Licht auf ein Objekt oder in das Innere eines Gebäudes zu lenken.

Die WO 02 / 1 69 77 A1 betrifft ein optisches Bauteil mit zwei transparenten Körpern mit jeweils einer Hauptfläche, die durch eine Vielzahl von durch Hohlraumtrenner getrennten Hohlräumen unterbrochen ist. Dabei durchdringen die Hohlraumtrenner jedes Körpers die Hohlräume des anderen Körpers. Die Hohlräume werden dabei durch die einander zugewandten Seitenflächen der Hohlraumtrenner gebildet. Weiterhin sind die Hohlräume und die Hohlraumtrenner so geformt, dass auch zwischen dem Boden jedes Hohlraumtrenners ein weiterer Hohlraum gebildet wird. Das optische Bauteil findet dabei besondere Anwendung bei der Verglasung von Bauten und bei der sogenannten "Tagesbeleuchtung" von Gebäuden.

Die DE 169 22 670 A1 offenbart eine Vorrichtung zur Lichtumlenkung, insbesondere von Sonnenlicht, mit einer planen Lichteintrittsoberfläche und Lichtaustrittsoberfläche sowie das Licht brechende und/oder reflektierende Grenzschichten, die zwischen den planen Oberflächen vorgesehen sind. Dabei ist die Lichteintrittsoberfläche eine Oberfläche eines ersten flächig ausgebildeten Elementes, das an seiner der Lichteintrittsoberfläche gegenüberliegenden Seite eine Oberflächenstruktur aufweist. Die Lichtaustrittsoberfläche ist weiterhin eine Oberfläche eines zweiten flächig ausgebildeten Elements, das an seiner der Lichtaustrittsoberfläche gegenüberliegenden Seite eine zweite Oberflächenstruktur aufweist, wobei die Oberflächenstrukturen beider Elemente derart beschaffen sind, dass durch Zusammenfügen der Elemente die Oberflächenstrukturen ineinandergreifen, sodass sich von beiden Elementen eingeschlossene Spalte bilden.

Es kann als Aufgabe angesehen werden, ein Flächenverbundelement anzugeben, das gute Eigenschaften zur Lichtlenkung hat und dabei insbesondere optisch transparent und homogen ist sowie im Bereich von Fenstern von Gebäuden vorteilhaft einsetzbar ist und auf einfache Weise hergestellt werden kann.

Die Aufgabe wird erfindungsgemäß durch ein Flächenverbundelement zur Lichtlenkung gemäß Anspruch 1, ein Fenster mit einem solchen Flächenverbundelement gemäß Anspruch 12 sowie ein Verfahren zur Herstellung eines solchen Flächenverbundelements gemäß Anspruch 13 gelöst. Vorteilhafte Weiterbildungen der Erfindung sind in den abhängigen Ansprüchen angegeben.

Das erfindungsgemäße Flächenverbundelement zur Lichtlenkung weist ein erstes Flächenelement mit einer ersten Mikrostruktur auf einer ersten Innenfläche und ein zweites Flächenelement mit einer zweiten Mikrostruktur auf einer zweiten Innenfläche auf, wobei die erste sowie die zweite Mikrostruktur jeweils Vertiefungen und/oder Erhöhungen aufweisen. Weiterhin sind die Flächenelemente im Flächenverbundelement so zueinander angeordnet, dass die erste und die zweite Innenfläche einander zugewandt sind sowie die erste und zweite Mikrostruktur so ineinandergreifend angeordnet sind, dass dabei innenliegende Mikrohohlräume zwischen den Mikrostrukturen gebildet werden. Die erste und zweite Mikrostruktur weisen zueinander korrespondierende Rastabschnitte zur formschlüssigen Festlegung der Flächenelemente aneinander auf, wobei die Rastabschnitte des ersten und des zweiten Flächenelements jeweils als ein korrespondierendes Paar aus einer Rastaufnahme und einem Rastelement gebildet sind.

Weiterhin betrifft die Erfindung ein Fenster mit einer Fensterscheibe und einem darauf aufgebrachten erfindungsgemäßen Flächenverbundelement.

Bei dem erfindungsgemäßen Verfahren zur Herstellung eines Flächenverbundelements zur Lichtlenkung wird zunächst ein erstes Flächenelement mit einer Erhöhungen und Vertiefungen umfassenden ersten Mikrostruktur auf einer ersten Innenfläche sowie ein zweites Flächenelement mit einer Erhöhungen und Vertiefungen umfassenden zweiten Mikrostruktur auf einer zweiten Innenfläche bereitgestellt, wobei dann nachfolgend die Flächenelemente derart zueinander angeordnet werden, dass die erste und die zweite Innenfläche einander zugewandt sowie die erste und zweite Mikrostruktur so ineinandergreifend angeordnet sind, dass dabei innenliegende Mikrohohlräume zwischen den Mikrostrukturen gebildet werden, wobei eine formschlüssige Festlegung der Flächenelemente aneinander mittels zueinander korrespondierenden Rastabschnitten erreicht wird, wobei die Rastabschnitte des ersten und des zweiten Flächenelements jeweils als ein korrespondierendes Paar aus einer Rastaufnahme und einem Rastelement gebildet sind.

Die Erfinder haben erkannt, dass es insbesondere zur Umlenkung von Tageslicht in die Tiefe der Räume in Fensterfassaden, beispielsweise in Oberlichtern, vorteilhaft ist, im Inneren eines Flächenverbundelements Mikrohohlräume, insbesondere Mikrolamellen, vorzusehen, an denen das einfallende Licht totalreflektiert wird, solange die Bedingungen für Totalreflektion eingehalten werden, sodass die Lichtumlenkung damit im Wesentlichen auf der verlustfreien Totalreflektion basiert. Dabei können durch eine Verzahnung der ersten und zweiten Mikrostruktur besonders lange und/oder präzise Mikrohohlräume erzeugt werden. Insbesondere können in vorteilhafter Weise Spalte mit einem sehr großen Aspektverhältnis (Verhältnis der Breite zur Höhe) erstellt werden, die mit der herkömmlichen Mikrostrukturierung von Oberflächen fertigungstechnisch nicht mehr realisierbar sind. Schließlich wird bei dem erfindungsgemäßen Flächenverbundelement aufgrund der formschlüssigen Festlegung der Flächenelemente aneinander in einfacher und vorteilhafter Weise eine Störung der Mikrohohlräume durch weitere Mittel oder Verfahren zur Festlegung vermieden bzw. deren Einfluss verringert, wobei insbesondere kein Klebstoff zum Festlegen der Flächenelemente aneinander notwendig ist. Gerade beim Einsatz in Glasfassaden und Fenstern ist zudem eine vollständige Durchsichtigkeit besonders vorteilhaft sowie von besonderer Bedeutung.

Das erfindungsgemäße Flächenverbundelement ist zunächst aus einem Verbund von wenigstens zwei Teilen, den Flächenelementen, gebildet, wobei das Flächenverbundelement bevorzugt vollflächig aus den beiden Flächenelementen gebildet ist bzw. sich die beiden Flächenelemente über die gesamte Fläche des Flächenverbundelements erstrecken. Dabei kann das Flächenverbundelement eine beliebige Form aufweisen, wobei eine Gestaltung als Platte bzw. als Scheibe bevorzugt wird. Weiterhin kann das Flächenverbundelement eine beliebige Dicke aufweisen, wobei das Flächenverbundelement bevorzugt eine Dicke zwischen 25 µm und 1 mm, besonders bevorzugt eine Dicke zwischen 50 µm und 500 µm und ganz besonders bevorzugt zwischen 100 µm und 250 µm aufweist.

Dabei können die erfindungsgemäßen Flächenelemente insbesondere mikrostrukturierte Folien oder Platten sein und können auf unterschiedliche Weise hergestellt werden, beispielsweise durch UV-Prägen, Heißprägen, Spritzguss oder weitere Verfahren. Die Flächenelemente sind bevorzugt aus einem hochtransparenten, witterungsbeständigen und/oder UV-stabilen Material gebildet. Als Materialien kommen insbesondere unterschiedlichste Kunststoffe, Silikone oder Glas, insbesondere bevorzugt in Verbindung mit Lack oder Silikon in Frage.

Dabei ist das erfindungsgemäße Flächenverbundelement zur Lichtlenkung vorgesehen, wobei die Lichtlenkung bevorzugt im Wesentlichen und besonders bevorzugt ausschließlich durch Totalreflektion an den Grenzflächen von im Inneren des Flächenverbundelements angeordneten Mikrohohlräumen erfolgt. Dabei sind diese Mikrohohlräume bevorzugt derart gebildet und/oder im Flächenverbundelement angeordnet, dass über die gesamte Fläche des Flächenverbundelements eine gleichbleibende Lichtlenkung erfolgt.

Erfindungsgemäß weisen beide Flächenelemente auf einer Innenfläche eine Mikrostruktur auf, die bevorzugt über die gesamte Fläche des Flächenelements gleichbleibend geformt und/oder angeordnet ist. Als Innenfläche wird dabei die Oberfläche des Flächenelements verstanden, die sich bei den beiden zu einem Flächenverbundelement aneinander angeordneten Flächenelementen jeweils im Inneren des Flächenverbundelements befindet. Bevorzugt weist die Mikrostruktur des ersten und/oder des zweiten Flächenelements zahlreiche zueinander identische und/oder periodisch über die Fläche angeordnete Mikrostrukturelemente auf, die jeweils eine beliebige Form haben können und aus beliebig vielen Abschnitten gebildet sein können. Dabei können die einzelnen Oberflächen der Mikrostrukturelemente sowohl flach bzw. ungekrümmt sein, als auch einen gekrümmten und/oder verwinkelten Verlauf aufweisen. Erfindungsgemäß ist die Mikrostruktur wenigstens einseitig auf jedem Flächenelement angeordnet, wobei jedoch auch eine beidseitige Anordnung denkbar ist. Die Bildung von Mikrostrukturen auf einer freiliegenden Außenseite kann jedoch auch unerwünscht sein, da beispielsweise im Außenbereich eines Fensterglases die Gefahr des Zerkratzens oder eines Zusetzens der Mikrostrukturen besteht. Eine derart mikrostrukturierte, äußere Oberfläche kann zudem nur eingeschränkt gereinigt werden, weswegen eine Beschichtung oder Abdeckung bevorzugt wird. Hingegen sind die im Flächenverbundelement innenliegenden Mikrostrukturen gegen eine Beschädigung und insbesondere gegen mechanische Einwirkungen geschützt.

Dabei kann die Mikrostruktur sowohl aus Erhöhungen, als auch aus Vertiefungen gebildet sein. Besonders bevorzugt ist die Mikrostruktur entlang wenigstens einer Raumrichtung, insbesondere bevorzugt entlang wenigstens einer Richtung der Oberfläche des Flächenverbundelements, aus Vertiefungen und Erhöhungen und besonders bevorzugt aus einer alternierenden Anordnung von Vertiefungen und Erhöhungen gebildet.

Erfindungsgemäß sind die Mikrostrukturen derart gebildet und auf der Innenfläche beider Flächenelemente angeordnet, dass beide Flächenelemente mit den Innenflächen aufeinander zugewandt zusammengeführt werden können, wobei die beiden Mikrostrukturen dann ineinander angeordnet werden. Dabei sind die Flächenelemente insbesondere derart angeordnet, dass Erhöhungen der ersten Mikrostruktur in Vertiefungen der zweiten Mikrostruktur und/oder Erhöhungen der zweiten Mikrostruktur in Vertiefungen der ersten Mikrostruktur eingreifen. Besonders bevorzugt ist, dass jeweils eine Erhöhung des ersten Flächenelements in einer Vertiefung des zweiten Flächenelements angeordnet ist und jeweils benachbart dazu eine Vertiefung des ersten Flächenelements in einer Erhöhung des zweiten Flächenelements angeordnet ist.

Zudem werden erfindungsgemäß durch das Ineinandergreifen der Mikrostrukturen zweier Flächenelemente Mikrohohlräume zur Lichtlenkung gebildet. Das Bilden der für die Lichtlenkung gut geeigneten Mikrohohlräume in Form von verbleibenden Zwischenräumen beim Ineinandergreifen der Mikrostrukturen erlaubt dabei in vorteilhafter Weise, die Mikrohohlräume auch mit kleinen Abmessungen sehr exakt zu bilden und anzuordnen. Gerade das Bilden von schmalen, länglichen Mikrohohlräumen sowie von Mikrohohlräumen, die unter einem relativ großen Winkel zur Oberfläche, d.h. entsprechend geringerem Winkel zur Flächennormalen angeordnet sind, ist durch das Ineinandergreifen der Mikrostrukturen gut erzielbar und zur Lichtlenkung vorteilhaft.

Dabei können die Mikrohohlräume grundsätzlich eine beliebige Form, eine beliebige Anordnung sowie eine beliebige Größe aufweisen. Zudem müssen nicht alle Mikrohohlräume des Flächenverbundelements identisch zueinander gebildet sein, wobei dies jedoch bevorzugt wird. Alternativ ist auch eine alternierende Anordnung von jeweils zwei zueinander unterschiedlichen Mikrohohlräumen bevorzugt.

Soweit auf Abmessungen der Mikrohohlräume, insbesondere die Länge, die Breite oder die Höhe, Bezug genommen wird, ist dies im Hinblick auf eine durch die Flächenelemente, d.h. die Folien oder Platten, gebildete senkrecht stehende Fläche zu verstehen. Die Tiefe der Mikrohohlräume bezieht sich dann auf das Maß in Richtung der Flächennormalen. Diese Bezugnahme ist zum besseren Verständnis gewählt und nicht beschränkend zu verstehen, d.h., das Flächenverbundelement kann natürlich auch in anderer Ausrichtung genutzt werden.

Die Mikrohohlräume und insbesondere Mikrolamellen können grundsätzlich in freier Gestaltung der Mikrostrukturen in unterschiedlichster Weise zur Oberfläche der Flächenelemente angeordnet werden: senkrecht, schräg, gekrümmt, mit über die Fläche variabler Schräge oder Krümmung, mit unterschiedlicher Dicke und/oder variierender Dicke, etc. Auch in der Ebene der Flächenelemente können die Mikrolamellen waagerecht oder senkrecht, in einem beliebigen Winkel und/oder auch in gekrümmter Weise angeordnet werden.

Generell ist jedoch bevorzugt, dass die Mikrohohlräume eine längliche Form aufweisen und dabei insbesondere als Mikrolamellen bzw. als Mikrospalte gebildet sind, wobei besonders bevorzugt eine mittlere Tiefe der Mikrohohlräume mehr als das 2-fache, ganz besonders bevorzugt mehr als das 5-fache und insbesondere bevorzugt mehr als das 10-fache einer mittleren Höhe der Mikrohohlräume beträgt. Weiterhin können sich die Mikroholräume in der Breite über die gesamte Fläche oder Abschnitte hiervon erstrecken. Beispielsweise kann die Breite der Mikroholräume wenigstens 1 mm, bevorzugt wenigstens 1 cm, besonders bevorzugt wenigstens 5 cm und ganz besonders bevorzugt wenigstens 10 cm betragen. Schließlich ist bevorzugt, dass die Mikrohohlräume in einer Tiefenrichtung einen Winkel zur Flächennormale des ersten und/oder des zweiten Flächenelements von weniger als 60°, besonders bevorzugt weniger als 45° und ganz besonders bevorzugt weniger als 30° aufweisen.

Die zwischen den Mikrostrukturen gebildeten, innenliegenden Mikrohohlräume können gasgefüllt, evakuiert oder mit einem Medium gefüllt sein, das optisch weniger dicht ist als das Material der Flächenelemente bzw. der Mikrostrukturen. Dadurch kommt es an den Grenzflächen zwischen dem optisch dichteren Material der Flächenelemente und/oder der Mikrostrukturen und den Mikrohohlräumen bei Lichteinfall unter hinreichend flachen Winkeln zu einer Totalreflexion, die zur Lichtlenkung genutzt wird.

Dabei sind die Mikrohohlräume erfindungsgemäß innenliegend, d.h., die Mikrohohlräume liegen eingebettet im Inneren des Flächenverbundelements und sind bevorzugt weder nach außen geöffnet, noch ist das Innere der Mikrohohlräume zugänglich, sodass das Flächenverbundelement unempfindlich gegenüber Berührung, Reinigung, Verkratzung oder andere äußere Einflüssen ist.

Erfindungsgemäß sind die beiden Flächenelemente mikrostrukturseitig miteinander verbunden und dadurch aneinander festgelegt, wobei diese Festlegung form- und kraftschlüssig erfolgen kann. Zudem kann die Verbindung der Flächenelemente und dabei insbesondere der Mikrostrukturen - zusätzlich zu der form- oder form- und kraftschlüssigen Festlegung - beispielsweise auch ergänzend durch Verkleben, Ultraschall-Verbonden, chemisches oder thermisches Fügen oder in beliebiger anderer Weise ausgeführt werden.

Die zueinander korrespondierenden Rastabschnitte sind auch zu einem formschlüssigen Halt vorgesehen und weisen dazu wenigstens einen Abschnitt oder einen Teilbereich mit einer entsprechenden, zueinander korrespondierenden Form auf.

Die erfindungsgemäßen Flächenverbundelemente können dabei, insbesondere als Verbundfolien oder Verbundplatten mit Mikrolamellen, in Fenstern und Fensterfassaden, insbesondere in Oberlichtern, eingesetzt werden, um den gewünschten Effekt der Tageslichtlenkung in die Tiefe von Räumen zu erreichen. Dabei können die Flächenverbundelemente insbesondere auf die Innenseite oder auf die Außenseite von Fenstergläsern aufkaschiert oder in den Zwischenraum von Isolierverglasungen eingebracht werden. Es ist entsprechend bevorzugt, dass das Flächenverbundelement derart gebildet ist, dass es sich, insbesondere als eine lichtleitend wirkende Folie, auf eine Glasscheibe oder einen anderen transparenten Körper laminieren lässt.

Bei einer bevorzugten Weiterbildung des erfindungsgemäßen Flächenverbundelements erstrecken sich die innenliegenden Mikrohohlräume entlang einer Tiefenrichtung des Flächenverbundelements über einen ersten Tiefenbereich bzw. innerhalb eines ersten Tiefenbereichs und die Festlegung des ersten und zweiten Flächenelements erfolgt in wenigstens einem zweiten Tiefenbereich, wodurch es in vorteilhafter Weise zu keiner Wechselwirkung mit den Mikrohohlräumen kommt. Entsprechend ist es besonders bevorzugt, dass die Rastabschnitte vollständig außerhalb des ersten, die Mikrohohlräume aufweisenden Tiefenabschnitts und/oder vollständig im Flächenverbundelement innenliegend angeordnet sind, wobei durch eine Anordnung vollständig innerhalb des Flächenverbundelements zugleich ein guter Schutz dieser Bereiche erreicht und ein Eindringen von Schmutz verhindert wird. Dabei ist die Tiefenrichtung die Richtung normal zu einer Oberfläche des Flächenverbundelements und somit typischerweise die Raumrichtung mit der geringsten räumlichen Ausdehnung des Flächenverbundelements.

Obwohl grundsätzlich ergänzend zur form- oder form- und kraftschlüssigen Festlegung der beiden Flächenelemente aneinander eine weitere beliebige Festlegung denkbar ist, erfolgt diese Festlegung des ersten und zweiten Flächenelements aneinander bei einer bevorzugten Weiterbildung des erfindungsgemäßen Flächenverbundelements ausschließlich form- oder form- und kraftschlüssig und dabei insbesondere nicht stoffschlüssig. Ganz besonders bevorzugt ist die Festlegung dabei klebstofffrei.

Um eine besonders stabile Festlegung der beiden Flächenelemente erreichen zu können, ist erfindungsgemäß vorgesehen, dass zur formschlüssigen Festlegung der Flächenelemente aneinander die Rastabschnitte des ersten und zweiten Flächenelements jeweils als ein korrespondierendes Paar aus einer Rastaufnahme und einem Rastelement gebildet sind. Dabei ist die Rastaufnahme bevorzugt an einem Flächenelement und ein korrespondierendes Rastelement am anderen Flächenelement angeordnet bzw. daran gebildet.

Die Rastaufnahme und das Rastelement können dabei grundsätzlich beliebig gebildet sein und insbesondere eine beliebige Form aufweisen. Bevorzugt weist die Rastaufnahme zwei aufeinander zuweisende und bevorzugt zueinander parallele Rastinnenflächen und das Rastelement zwei aufeinander zuweisende und bevorzugt zueinander parallele Rastaußenflächen auf, wobei jeweils eine Rastinnenfläche und eine Rastaußenfläche in flächigem Kontakt zueinander stehen. Ganz besonders bevorzugt erfolgt die Festlegung der Flächenelemente durch eine Presspassung der Rastelemente, wobei insbesondere bevorzugt der Abstand der beiden Rastaußenflächen zueinander größer als der Abstand der Rastinnenflächen zueinander ist. Dabei ist der Abstand der beiden Rastaußenflächen zueinander bevorzugt zwischen 0,01 % und 10 %, besonders bevorzugt zwischen 0,1 % und 5 % und ganz besonders bevorzugt zwischen 0,5 % und 2 größer als der Abstand der Rastinnenflächen zueinander. Dabei besteht dieser Abstand grundsätzlich zwischen den korrespondierenden und/oder zu einer Rastaufnahme und/oder zu einem Rastelement gehörenden Flächen.

Ebenfalls vorteilhaft ist eine Ausführung des erfindungsgemäßen Flächenverbundelements, bei dem die Festlegung der beiden Flächenelemente aneinander durch Verrasten erfolgt, wobei bevorzugt wenigstens eine Rastnase am Rastelement oder an der Rastaufnahme angeordnet ist, um die beiden Flächenelemente gegen ein Auseinanderziehen zu sichern. Dabei kann es sich um eine lösbare Verbindung der beiden Flächenelemente handeln oder aber um eine irreversible Verrastung, die ohne eine zumindest teilweise Zerstörung der Mikrostrukturen nicht mehr geöffnet werden kann.

Die Höhe der Mikrohohlräume in der Höhenrichtung des Flächenverbundelements und die Tiefe der Mikrohohlräume in der Tiefenrichtung des Flächenverbundelements muss so gewählt werden, dass einerseits eine möglichst große Lichtlenkung erreicht wird und andererseits jedoch auch gute optische Eigenschaften des Flächenverbundelements erhalten bleiben, sodass es von einem Benutzer nicht als störend empfunden wird. Entsprechend ist eine vorteilhafte Ausführung des Flächenverbundelements bevorzugt bei der die Höhe der Mikrohohlräume zwischen 100 nm und 20 µm, besonders bevorzugt zwischen 1 µm und 10 µm und ganz besonders bevorzugt zwischen 3 µm und 8 µm und/oder die Tiefe zwischen 20 µm und 1 mm, besonders bevorzugt zwischen 50 µm und 500 µm und ganz besonders bevorzugt zwischen 100 µm und 300 µm beträgt.

Eine besonders vorteilhafte Weiterbildung des erfindungsgemäßen Flächenverbundelements sieht vor, dass die Flächenelemente und insbesondere das gesamte Flächenverbundelement vollständig transparent sind. Vollständig transparent bedeutet insbesondere ohne mit dem Auge sichtbare Trübungen, Einschlüsse, Verfärbungen und/oder Hohlräume, d.h., das Flächenverbundelement bzw. die Flächenelemente sind nicht diffus und/oder im Wesentlichen uneingeschränkt lichtdurchlässig. Insbesondere ist bevorzugt, dass die beiden Flächenelemente und ganz besonders bevorzugt somit auch das Flächenverbundelement als transparente und/oder flexible Folien gebildet sind.

Mehrere Ausführungsbeispiele eines erfindungsgemäßen Flächenverbundelements zur Lichtlenkung werden nachstehend mit Bezug auf die Zeichnungen näher erläutert. In den Figuren zeigen:
- Fig. 1: eine schematische Schnittansicht einer Fensterscheibe mit einem Flächenverbundelement;
- Fig. 2: eine Frontansicht der in Fig. 1 dargestellten Fensterscheibe;
- Fig. 3: eine schematische Längsschnitt-Darstellung eines ersten und eines zweiten Flächenelements mit einer Mikrostruktur gemäß einer ersten Ausführungsform;
- Fig. 4: eine schematische Längsschnitt-Darstellung eines aus den Flächenelementen zusammengesetzten Flächenverbundelements gemäß der ersten Ausführungsform;
- Fig. 5: eine schematische Längsschnitt-Darstellung eines ersten und eines zweiten Flächenelements mit einer Mikrostruktur gemäß einer zweiten Ausführungsform;
- Fig. 6: eine schematische Längsschnitt-Darstellung eines aus den Flächenelementen zusammengesetzten Flächenverbundelements gemäß der zweiten Ausführungsform;
- Fig. 7: eine schematische Längsschnitt-Darstellung eines ersten und eines zweiten Flächenelements mit einer Mikrostruktur gemäß einer dritten Ausführungsform;
- Fig. 8: eine schematische Längsschnitt-Darstellung eines aus den Flächenelementen zusammengesetzten Flächenverbundelements gemäß der dritten Ausführungsform;
- Fig. 9: eine schematische Längsschnitt-Darstellung eines ersten und eines zweiten Flächenelements mit einer Mikrostruktur gemäß einer ersten Ausführungsform, die nicht Teil der beanspruchten Erfindung ist;
- Fig. 10: eine schematische Längsschnitt-Darstellung eines aus den Flächenelementen zusammengesetzten Flächenverbundelements gemäß der ersten Ausführungsform, die nicht Teil der beanspruchten Erfindung ist;
- Fig. 11: eine schematische Längsschnitt-Darstellung eines ersten und eines zweiten Flächenelements mit einer Mikrostruktur gemäß einer vierten Ausführungsform;
- Fig. 12: eine schematische Längsschnitt-Darstellung eines aus den Flächenelementen zusammengesetzten Flächenverbundelements gemäß der vierten Ausführungsform;
- Fig. 13: eine schematische Längsschnitt-Darstellung eines ersten und eines zweiten Flächenelements mit einer Mikrostruktur gemäß einer fünften Ausführungsform;
- Fig. 14: eine schematische Längsschnitt-Darstellung eines aus den Flächenelementen zusammengesetzten Flächenverbundelements gemäß der fünften Ausführungsform;
- Fig. 15: eine schematische Längsschnitt-Darstellung eines ersten und eines zweiten Flächenelements mit einer Mikrostruktur gemäß einer zweiten Ausführungsform, die nicht Teil der beanspruchten Erfindung ist; und
- Fig. 16: eine schematische Längsschnitt-Darstellung eines aus den Flächenelementen zusammengesetzten Flächenverbundelements gemäß der zweiten Ausführungsform, die nicht Teil der beanspruchten Erfindung ist.

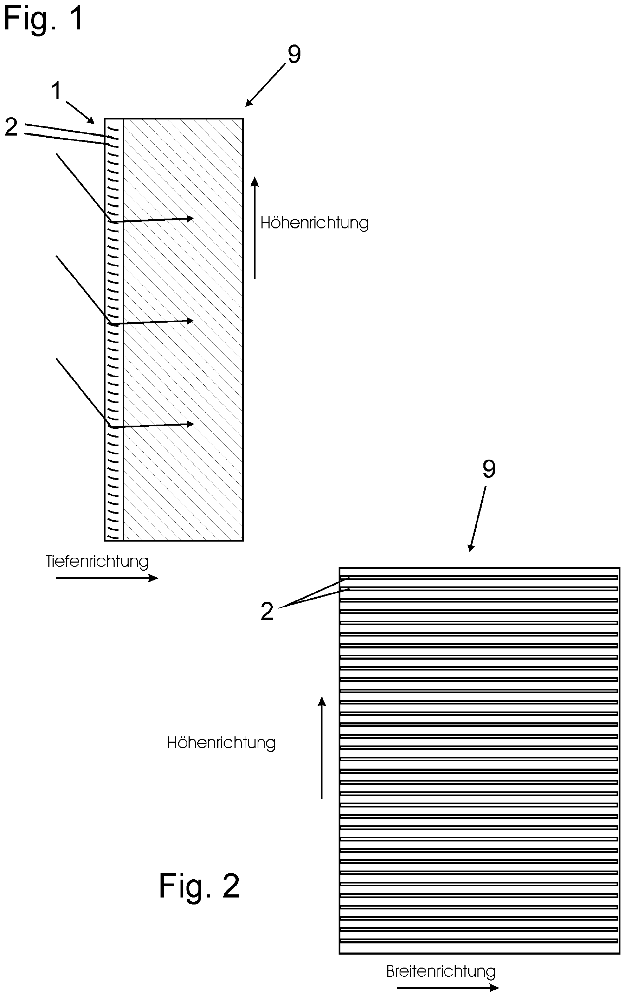

Die verschiedenen Ausführungsformen eines Flächenverbundelements 1 sind jeweils als ein Verbund aus zwei transparenten Flächenelementen 11, 21 gebildet, wobei die Flächenelemente 11, 21 bevorzugt jeweils als Folien und/oder Platten gebildet sind. Weiterhin weisen die Flächenelemente 11, 21 jeweils mindestens einseitig eine Mikrostruktur 12, 22 auf. Die beiden Flächenelemente 11, 21 sind dabei mikrostrukturseitig mit aufeinander liegenden Innenflächen 13, 23 verbunden, sodass zwischen den Mikrostrukturen 12, 22 definierte Mikrohohlräume 2, insbesondere Mikrospalte bzw. Mikrolamellen, entstehen. Die Flächenverbundelemente 1 können dabei insbesondere dazu verwendet werden, um auf der Oberfläche einer Fensterscheibe 9 angeordnet zu werden und somit eine verbesserte Lichtlenkung von schräg einfallendem Licht in den Raum hinein zu erreichen (siehe Fig. 1).

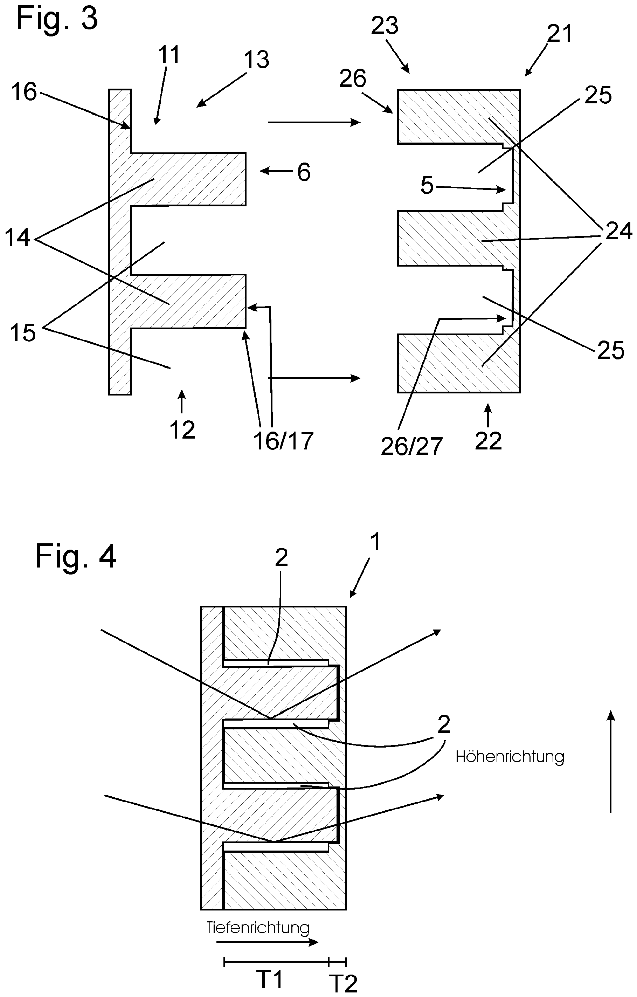

Dabei sind die Mikrostrukturen 12, 22 eines Flächenverbundelements 1 ineinander verzahnt, sodass jeweils eine Erhöhung 14 der ersten Mikrostruktur 12 in einer Vertiefung 25 der zweiten Mikrostruktur 22 und eine Erhöhung 24 der zweiten Mikrostruktur 22 in einer Vertiefung 15 der ersten Mikrostruktur 12 positioniert ist. Durch die Verzahnung der Mikrostrukturen 12, 22 können Spalte als Mikrohohlräume 2 mit sehr großem Aspektverhältnis (Verhältnis Breite zu Höhe) gebildet werden (siehe Fig. 2), die mit der herkömmlichen Mikrostrukturierung von Oberflächen fertigungstechnisch nicht bzw. nicht auf einfache Weise realisierbar sind.

Die durch die mikrostrukturseitige Verbindung entstehenden, zwischen den Mikrostrukturen 12, 22 eingebetteten Mikrohohlräume 2 sind mit Luft gefüllt, wodurch das an den Mikrohohlräumen 2 einfallende Licht totalreflektiert wird, solange die Bedingungen für Totalreflektion eingehalten werden. Die Lichtumlenkung basiert damit im Wesentlichen auf der verlustfreien Totalreflektion.

In der Folien-/Plattenebene des Flächenverbundelements 1 können die Mikrohohlräume 2 waagerecht oder senkrecht, in einem beliebigen Winkel oder auch in gekrümmter Weise angeordnet werden. Fig. 3 - 16 zeigen beispielhaft einige Mikrostrukturkombinationen und die daraus bei Zusammenfügung der beiden Flächenelemente 11, 21 entstehenden Querschnittsprofile der Mikrohohlräume 2, insbesondere von Mikrolamellen. In den Zeichnungen sind die Tiefen-, Breiten- und Höhenrichtungen zum besseren Verständnis unter Bezug auf ein senkrecht stehendes flächiges Element angegeben.

Durch eine geeignete Profilgeometrie können die beiden mikrostrukturierten Innenflächen 13, 23 der beiden Flächenelemente 11, 21 kraftschlüssig aneinander festgelegt und/oder ineinander verrastet werden.

Bei einer ersten, in den Figuren 3 und 4 gezeigten Ausführung erfolgt im Bereich der Vertiefungen 15 der ersten Mikrostruktur 12 eine ausschließlich kraftschlüssige Festlegung der beiden Flächenelemente 11, 21 aneinander über zwei ebene Haftabschnitte 16, 26 der beiden Mikrostrukturen 12, 22, während im Bereich der Vertiefungen 25 der zweiten Mikrostruktur 22 zusätzlich eine formschlüssige Festlegung erfolgt, wobei ein Rastabschnitt 17 am Ende der Erhöhungen 14 der ersten Mikrostruktur 12 mit einem korrespondierenden Rastabschnitt 27 im Inneren der Vertiefungen 25 der zweiten Mikrostruktur 22 in Eingriff gelangt. Dabei ist der erste Rastabschnitt 17 als männliches Rastelement 6 gebildet, während der zweite Rastabschnitt 27 als weibliche Rastaufnahme 5 gebildet ist. Zwischen den Mikrostrukturen 12, 22 werden jeweils Mikrohohlräume 2 gebildet, die rechtwinklig zur Oberfläche des Flächenverbundelements 1 verlaufen.

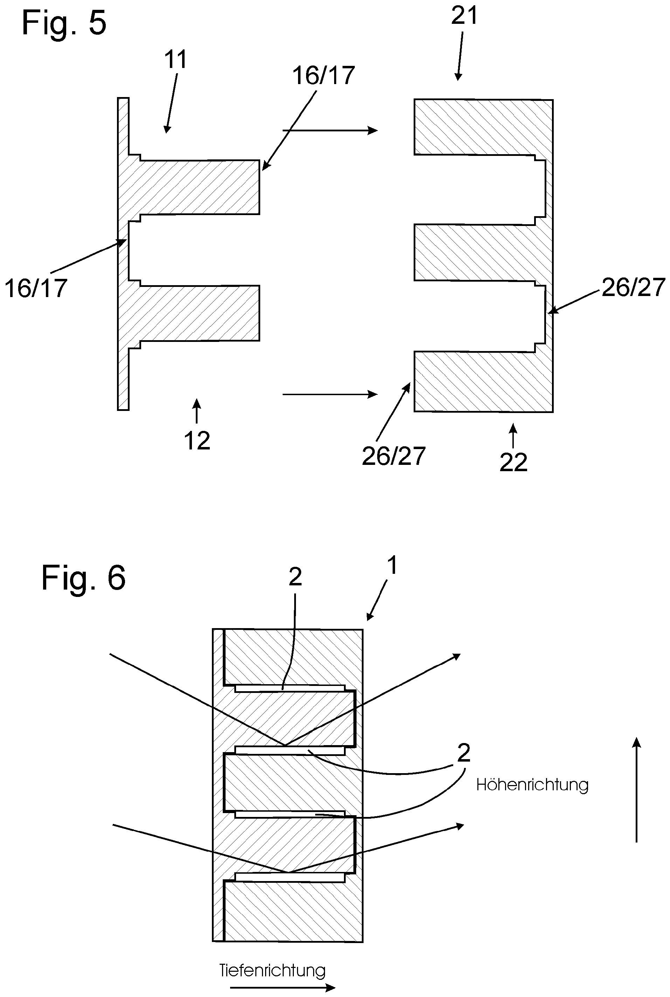

Eine weitere, in den Figuren 5 und 6 gezeigte Ausführung unterscheidet sich von der ersten Ausführung lediglich dadurch, dass im Bereich der Vertiefungen 15, 25 beider Mikrostrukturen 12, 22 eine kraft- und formschlüssige Festlegung der beiden Flächenelemente 11, 21 aneinander erfolgt, sodass die beiden Flächenelemente 11, 21 einen zueinander spiegelsymmetrischen Aufbau aufweisen und lediglich verschoben zueinander angeordnet sind.

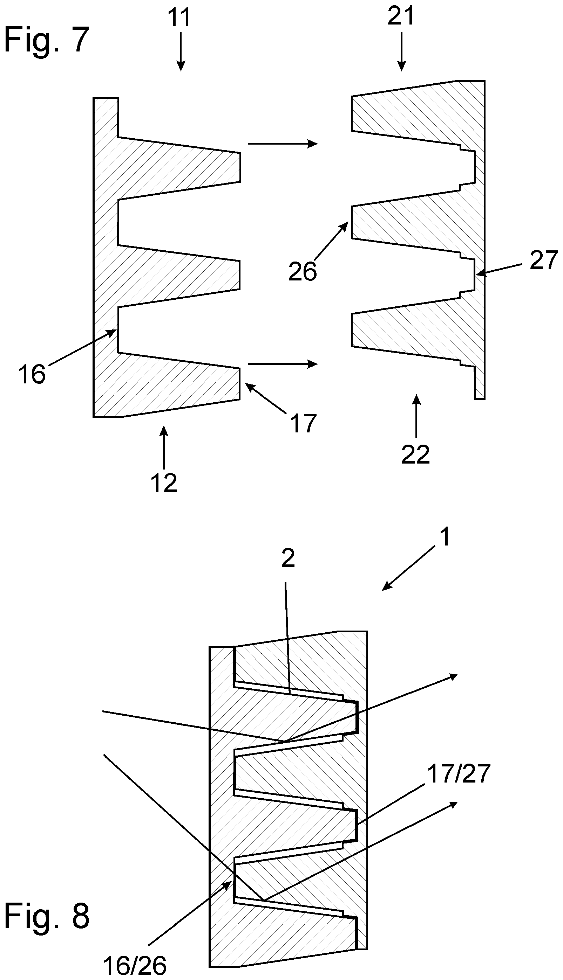

Eine weitere, in den Figuren 7 und 8 gezeigte Ausführung unterscheidet sich von der ersten Ausführung lediglich dadurch, dass die Mikrohohlräume 2 nicht mehr parallel zur Tiefenrichtung, sondern alternierend in Höhenrichtung geneigt verlaufen.

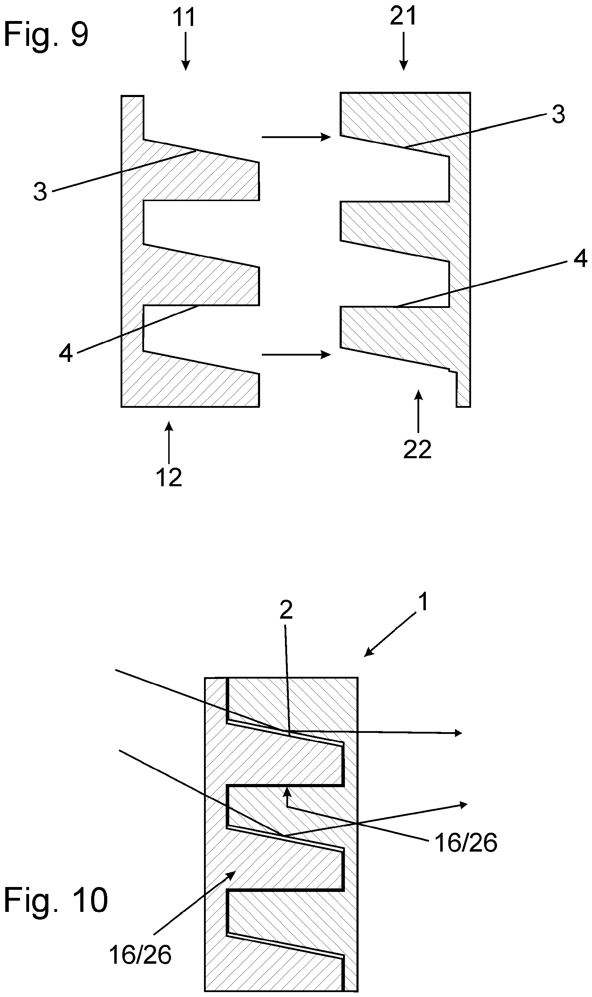

Die Verrastung kann auch derart ausgelegt werden, dass nur an jeweils einer Seite der Mikrostruktur 12, 22 Mikrohohlräume 2 entstehen, während auf der anderen Seite eine kraftschlüssige Materialhaftung stattfindet. Dazu ist ggf. eine leicht haftende Oberfläche notwendig, die beispielsweise durch Wahl eines leicht adhäsiven Materials in der Mikrostruktur 12, 22 oder ein entsprechendes Coating erzielt werden kann. Dabei sind jeweils zwei erste Flächen 3 jeder der beiden Mikrostrukturen 12, 22 beabstandet und bevorzugt auch parallel zueinander angeordnet, sodass diese einen Mikrohohlraum 2 bilden, während zwei zweite Flächen 4 der beiden Mikrostrukturen 12, 22 vollflächig in Kontakt stehen und einen Haftabschnitt 16, 26 bilden (siehe Fig. 9 und 10).

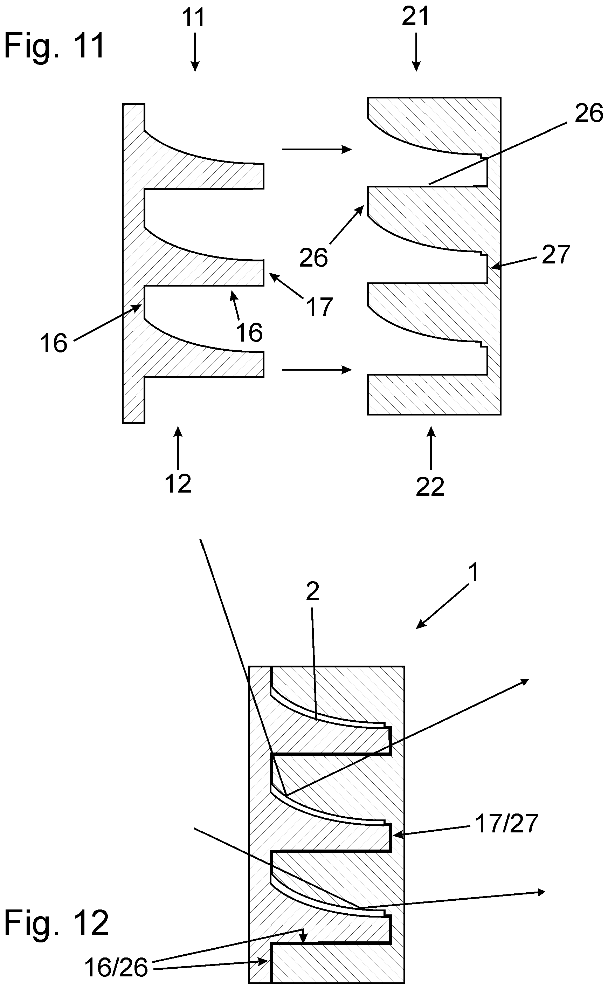

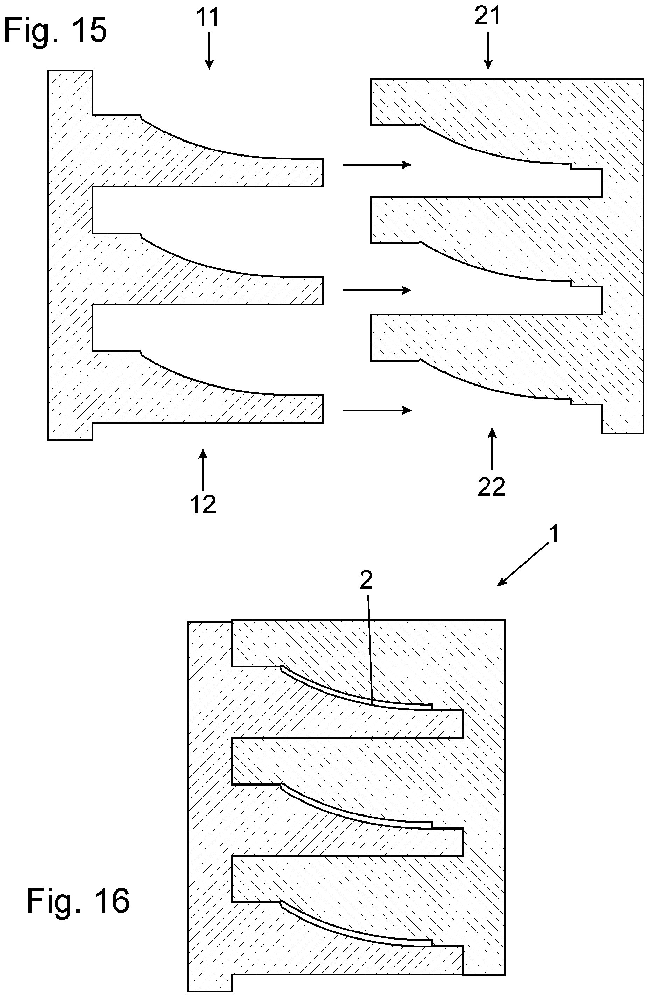

Eine in den Figuren 11 und 12 gezeigte Ausführung unterscheidet sich von der vorherigen Ausführung der Figuren 9 und 10, die nicht Teil der beanspruchten Erfindung ist. maßgeblich dadurch, dass zusätzlich zur kraftschlüssigen Festlegung mittels Haftabschnitten 16, 26 auch eine formschlüssige Festlegung mittels Rastabschnitten 17, 27 erfolgt. Zudem weisen die als Mikrolamellen gebildeten Mikrohohlräume 2 einen gekrümmten Verlauf in der Tiefenrichtung auf. Dabei ist es grundsätzlich auch möglich, dass die Mikrohohlräume 2 sich nicht über die gesamte Tiefe der Vertiefungen 15, 25 erstrecken, wie es beispielhaft in den Figuren 15 und 16 dargestellt ist.

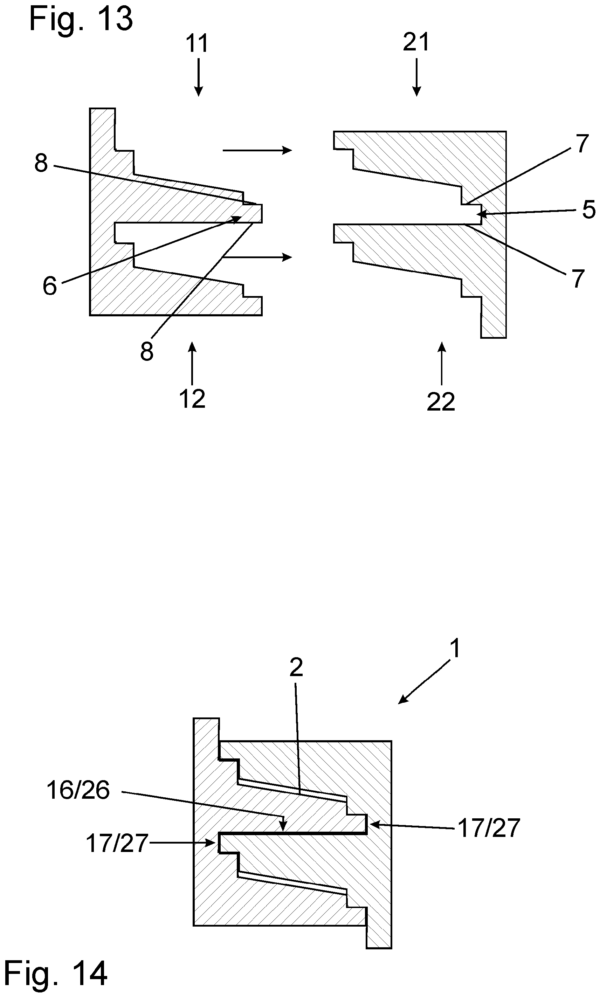

Eine Verrastung kann dabei insbesondere auch dadurch erreicht werden, dass im Bereich des Rastabschnitts 17, 27 die Breite der Rastaufnahme 5 geringfügig geringer ist als die Breite des Rastelements 6, wodurch es zu einer Presspassung kommt. Dazu weisen die vorzugsweise zueinander parallelen Rastinnenflächen 7 der Rastaufnahme 5 einen zueinander geringeren Abstand auf als die beiden Rastaußenflächen 8 des Rastelements 6 (siehe Fig. 13 und 14).

Die als Verbundfolien oder -platten gebildeten Flächenverbundelemente 1 mit Mikrolamellen als Mikrohohlräume 2 können in Fenstern, auf Fensterscheiben 9 und an Fensterfassaden, insbesondere in Oberlichtern, eingesetzt werden, um den gewünschten Effekt der Tageslichtlenkung in die Tiefe von Räumen zu erreichen. Folien können auf die Innenseite oder Außenseite der Fenstergläser aufkaschiert oder in den Zwischenraum von Isolierverglasungen eingebracht werden. Die Mikrohohlräume 2 liegen eingebettet im Inneren der Folie oder Platte, insofern ist die Folie unempfindlich gegenüber Berührung, Reinigung, Verkratzung oder andere äußere Einflüsse.

### Bezugszeichenliste

- 1: Flächenverbundelement
- 2: Mikrohohlräume
- 3: erste Fläche
- 4: zweite Fläche
- 5: Rastaufnahme
- 6: Rastelement
- 7: Rastinnenfläche
- 8: Rastaußenfläche
- 9: Fensterscheibe
- 11: erstes Flächenelement
- 12: erste Mikrostruktur
- 13: erste Innenfläche
- 14: Erhöhungen der ersten Mikrostruktur
- 15: Vertiefungen der ersten Mikrostruktur
- 16: Haftabschnitt der ersten Mikrostruktur
- 17: Rastabschnitt der ersten Mikrostruktur
- 21: zweites Flächenelement
- 22: zweite Mikrostruktur
- 23: zweite Innenfläche
- 24: Erhöhungen der zweiten Mikrostruktur
- 25: Vertiefungen der zweiten Mikrostruktur
- 26: Haftabschnitt der zweiten Mikrostruktur
- 27: Rastabschnitt der zweiten Mikrostruktur
- T1: erster Tiefenbereich
- T2: zweiter Tiefenbereich

## Patentansprüche

1. Flächenverbundelement (1) zur Lichtlenkung, mit
- einem ersten Flächenelement (11) mit einer ersten Mikrostruktur (12) auf einer ersten Innenfläche (13), wobei die erste Mikrostruktur (12) Erhöhungen (14) und/oder Vertiefungen (15) aufweist,
- und einem zweiten Flächenelement (21) mit einer zweiten Mikrostruktur (22) auf einer zweiten Innenfläche (23), wobei die zweite Mikrostruktur (22) Vertiefungen (24) und/oder Erhöhungen (25) aufweist,
- wobei die Flächenelemente (11, 21) so zueinander angeordnet sind, dass die erste und die zweite Innenfläche (13, 23) einander zugewandt sind sowie die erste und zweite Mikrostruktur (12, 22) so ineinandergreifend angeordnet sind, dass dabei innenliegende Mikrohohlräume (2) zwischen den Mikrostrukturen (12, 22) gebildet werden, **dadurch gekennzeichnet, dass**
- die erste und zweite Mikrostruktur (12, 22) zueinander korrespondierende Rastabschnitte (17, 27) zur formschlüssigen Festlegung der Flächenelemente (11, 21) aneinander aufweisen, und
- die Rastabschnitte (17, 27) des ersten und zweiten Flächenelements (11, 21) jeweils als ein korrespondierendes Paar aus einer Rastaufnahme (5) und einem Rastelement (6) gebildet sind.

2. Flächenverbundelement nach Anspruch 1, **dadurch gekennzeichnet, dass** sich die innenliegenden Mikrohohlräume (2) entlang einer Tiefenrichtung des Flächenverbundelements (1) über einen ersten Tiefenbereich (T1) erstrecken und die Festlegung des ersten und zweiten Flächenelements in wenigstens einem zweiten Tiefenbereich (T2) erfolgt.

3. Flächenverbundelement nach Anspruch 1 oder 2, **dadurch gekennzeichnet, dass** die Rastabschnitte (17, 27) vollständig außerhalb des ersten Tiefenabschnitts (T1) und/oder vollständig im Flächenverbundelement (1) innenliegend angeordnet sind.

4. Flächenverbundelement nach wenigstens einem der vorangehenden Ansprüche, **dadurch gekennzeichnet, dass** die Festlegung des ersten und zweiten Flächenelements (11, 21) aneinander ausschließlich formschlüssig oder form- und kraftschlüssig erfolgt.

5. Flächenverbundelement nach wenigstens einem der vorangehenden Ansprüche, **dadurch gekennzeichnet, dass** die Rastaufnahme (5) zwei aufeinander zuweisende und zueinander parallele Rastinnenflächen (7) aufweist und das Rastelement (6) zwei aufeinander zuweisende und zueinander parallele Rastaußenflächen (8) aufweist, wobei jeweils eine Rastinnenfläche (7) und eine Rastaußenfläche (8) in flächigem Kontakt zueinander stehen.

6. Flächenverbundelement nach wenigstens einem der vorangehenden Ansprüche, **dadurch gekennzeichnet, dass** die Festlegung der Flächenelemente (11, 21) durch eine Presspassung der Rastabschnitte (17, 21) erfolgt, wobei bevorzugt der Abstand der beiden Rastaußenflächen (8) zueinander größer als der Abstand der Rastinnenflächen (7) zueinander ist.

7. Flächenverbundelement nach wenigstens einem der vorangehenden Ansprüche, **dadurch gekennzeichnet, dass** die Festlegung der beiden Flächenelemente (11, 21) aneinander durch Verrasten erfolgt, wobei bevorzugt wenigstens eine Rastnase am Rastelement (6) oder an der Rastaufnahme (5) angeordnet ist, um die beiden Flächenelemente (11, 21) gegen ein Auseinanderziehen zu sichern.

8. Flächenverbundelement nach wenigstens einem der vorangehenden Ansprüche, **dadurch gekennzeichnet, dass** das Flächenverbundelement (1) vollständig transparent ist.

9. Flächenverbundelement nach wenigstens einem der vorangehenden Ansprüche, **dadurch gekennzeichnet, dass** die beiden Flächenelemente (11, 21) als transparente und/oder flexible Folien gebildet sind.

10. Flächenverbundelement nach wenigstens einem der vorangehenden Ansprüche, **dadurch gekennzeichnet, dass** die Mikrohohlräume (2) eine Höhe zwischen 100 nm und 20 µm, bevorzugt zwischen 1 µm und 10 µm und besonders bevorzugt zwischen 3 µm und 8 µm aufweisen.

11. Flächenverbundelement nach wenigstens einem der vorangehenden Ansprüche, **dadurch gekennzeichnet, dass** die Mikrohohlräume (2) eine Tiefe zwischen 20 µm und 1 mm, bevorzugt zwischen 50 µm und 500 µm und besonders bevorzugt zwischen 100 µm und 300 µm aufweisen.

12. Fenster mit
- einer Fensterscheibe (9) und
- einem darauf aufgebrachten Flächenverbundelement (1) nach einem der vorangehenden Ansprüche.

13. Verfahren zur Herstellung eines Flächenverbundelements (1) zur Lichtlenkung, umfassend
- Bereitstellung eines ersten Flächenelements (11) mit einer ersten Mikrostruktur (12) auf einer ersten Innenfläche (13), wobei die erste Mikrostruktur (12) Erhöhungen (14) und Vertiefungen (15) umfasst,
- Bereitstellung eines zweiten Flächenelements (21) mit einer zweiten Mikrostruktur (22) auf einer zweiten Innenfläche (23), wobei die zweite Mikrostruktur (22) Erhöhungen (24) und Vertiefungen (25) umfasst,
- Anordnung der Flächenelemente (11, 21) zueinander so, dass die erste und die zweite Innenfläche (13, 23) einander zugewandt sind sowie die erste und zweite Mikrostruktur (12, 22) so ineinandergreifend angeordnet sind, dass dabei innenliegende Mikrohohlräume (2) zwischen den Mikrostrukturen (12, 22) gebildet werden,
- wobei eine formschlüssige Festlegung der Flächenelemente aneinander (11, 21) mittels zueinander korrespondierender Rastabschnitte (17, 27) der ersten und zweiten Mikrostruktur (12, 22) erreicht wird,
- wobei die Rastabschnitte (17, 27) des ersten und zweiten Flächenelements (11, 21) jeweils als ein korrespondierendes Paar aus einer Rastaufnahme (5) und einem Rastelement (6) gebildet sind.

## Claims

1. Composite panel element (1) for guiding light, with
- a first panel element (11) with a first microstructure (12) on a first inner surface (13), wherein the first microstructure (12) has elevations (14) and/or recesses (15),
- and a second panel element (21) with a second microstructure (22) on a second inner surface (23), wherein the second microstructure (22) has recesses (24) and/or elevations (25),
- wherein the panel elements (11, 21) are arranged relative to one another such that the first and second inner surfaces (13, 23) face one another and the first and second microstructures (12, 22) are arranged in an interlocking manner such that internal micro cavities (2) are formed between the microstructures (12, 22), **characterized in that**
- the first and second microstructures (12, 22) have snap-in sections (17, 27) corresponding to one another for form-fit fastening of the panel elements (11, 21) to one another, and
- the snap-in sections (17, 27) of the first and second panel elements (11, 21) are each formed as a corresponding pair of a snap-in catch (5) and a snap-in element (6).

2. Composite panel element according to claim 1, **characterized in that** the internal micro cavities (2) extend along a depth direction of the composite panel element (1) over a first depth section (T1) and the fixing of the first and second panel elements takes place in at least a second depth section (T2).

3. Composite panel element according to claim 1 or 2, **characterized in that** the snap-in sections (17, 27) are arranged completely outside the first depth section (T1) and/or completely inside the composite panel element (1).

4. Composite panel element according to at least one of the preceding claims, **characterized in that** the first and second panel elements (11, 21) are fixed to one another exclusively in a form-fitting or form- and force-fitting manner.

5. Composite panel element according to at least one of the preceding claims, **characterized in that** the snap-in catch (5) has two snap-in inner surfaces (7) facing one another and parallel to one another and the snap-in element (6) has two snap-in outer surfaces (8) facing one another and parallel to one another, wherein one snap-in inner surface (7) and one snap-in outer surface (8) are in planar contact with one another in each case.

6. Composite panel element according to at least one of the preceding claims, **characterized in that** the panel elements (11, 21) are fixed by a press fit of the snap-in sections (17, 21), the distance between the two snap-in outer surfaces (7) preferably being greater than the distance between the snap-in inner surfaces (8).

7. Composite panel element according to at least one of the preceding claims, **characterized in that** the two panel elements (11, 21) are fixed to one another by snap-in, at least one snap-in lug preferably being arranged on the snap-in element (6) or on the snap-in catch (5) in order to secure the two panel elements (11, 21) against being pulled apart.

8. Composite panel element according to at least one of the preceding claims, **characterized in that** the composite panel element (1) is completely transparent.

9. Composite panel element according to at least one of the preceding claims, **characterized in that** the two panel elements (11, 21) are formed as transparent and/or flexible films.

10. Composite panel element according to at least one of the preceding claims, **characterized in that** the micro cavities (2) have a height of between 100 nm and 20 µm, preferably between 1 µm and 10 µm and particularly preferably between 3 µm and 8 µm.

11. Composite panel element according to at least one of the preceding claims, **characterized in that** the micro cavities (2) have a depth of between 20 µm and 1 mm, preferably between 50 µm and 500 µm and particularly preferably between 100 µm and 300 µm.

12. Window with
- a window pane (9) and
- a composite panel element (1) applied thereto according to one of the preceding claims.

13. Method of manufacturing a composite panel element (1) for guiding light, comprising
- providing a first panel element (11) with a first microstructure (12) on a first inner surface (13), wherein the first microstructure (12) comprises elevations (14) and recesses (15),
- providing a second panel element (21) having a second microstructure (22) on a second inner surface (23), wherein the second microstructure (22) comprises elevations (24) and recesses (25),
- arrangement of the panel elements (11, 21) relative to one another such that the first and second inner surfaces (13, 23) face one another and the first and second microstructures (12, 22) are arranged in an interlocking manner such that internal micro cavities (2) are formed between the microstructures (12, 22),
- wherein a form-fit fixing of the panel elements to one another (11, 21) is achieved by means of corresponding snap-in sections (17, 27) of the first and second microstructure (12, 22),
- wherein the snap-in sections (17, 27) of the first and second panel elements (11, 21) are each formed as a corresponding pair of a snap-in catch (5) and a snap-in element (6).

## Revendications

1. Élément de panneau composite (1) pour guider la lumière, avec
- un premier élément de panneau (11) avec une première microstructure (12) sur une première surface intérieure (13), dans lequel la première microstructure (12) a des élévations (14) et/ou des évidements (15),
- et un deuxième élément de panneau (21) avec une deuxième microstructure (22) sur une deuxième surface intérieure (23), dans lequel la deuxième microstructure (22) a des évidements (24) et/ou des élévations (25),
- dans lequel les éléments de panneau (11, 21) sont disposés l'un par rapport à l'autre de manière à ce que les première et deuxième surfaces intérieures (13, 23) se fassent face et que les première et deuxième microstructures (12, 22) soient disposées de manière à s'imbriquer l'une dans l'autre, formant ainsi des microcavités internes (2) entre les microstructures (12, 22), **caractérisé par le fait que**
- les première et deuxième microstructures (12, 22) ont des sections d'encliquetage (17, 27) correspondant l'une à l'autre pour la fixation de forme des éléments de panneau (11, 21) l'un à l'autre, et
- les sections d'encliquetage (17, 27) des premier et deuxième éléments de panneau (11, 21) sont chacune formées d'une paire correspondante d'un logement d'encliquetage (5) et d'un élément d'encliquetage (6).

2. Élément de panneau composite selon la revendication 1, **caractérisé par le fait que** les microcavités internes (2) s'étendent le long d'une direction de profondeur de l'élément de panneau composite (1) sur une première section de profondeur (T1) et que la fixation des premier et deuxième éléments de panneau a lieu dans au moins une deuxième section de profondeur (T2).

3. Élément de panneau composite selon la revendication 1 ou 2, **caractérisé par le fait que** les sections d'encliquetage (17, 27) sont disposées complètement à l'extérieur de la première section de profondeur (T1) et/ou complètement à l'intérieur de l'élément de panneau composite (1).

4. Elément de panneau composite selon au moins l'une des revendications précédentes, **caractérisé par le fait que** la fixation du premier et du deuxième élément panneau (11, 21) l'un à l'autre s'effectue exclusivement par complémentarité de forme ou par complémentarité de forme et de force.

5. Élément de panneau composite selon au moins l'une des revendications précédentes, **caractérisé par le fait que** le logement d'encliquetage (5) présente deux surfaces intérieures d'encliquetage (7) se faisant face et parallèles l'une à l'autre et que l'élément d'encliquetage (6) présente deux surfaces extérieures d'encliquetage (8) se faisant face et parallèles l'une à l'autre, une surface intérieure d'encliquetage (7) et une surface extérieure d'encliquetage (8) étant en contact planaire l'une avec l'autre dans chacun des cas.

6. Elément de panneau composite selon au moins l'une des revendications précédentes, **caractérisé en ce que** les éléments de panneau (11, 21) sont fixés par un ajustement serré des sections d'encliquetage (17, 21), la distance entre les deux surfaces extérieures encliquetables (8) étant de préférence supérieure à la distance entre les surfaces intérieures encliquetables (7).

7. Elément de panneau composite selon au moins l'une des revendications précédentes, **caractérisé en ce que** les deux éléments de panneau (11, 21) sont fixés l'un à l'autre par encliquetage, au moins un ergot d'encliquetage étant de préférence disposé sur l'élément d'encliquetage (6) ou sur le logement d'encliquetage (5) afin de bloquer les deux éléments de panneau (11, 21) pour éviter qu'ils ne s'écartent.

8. Elément de panneau composite selon au moins l'une des revendications précédentes, **caractérisé par le fait que** l'élément de panneau composite (1) est complètement transparent.

9. Élément de panneau composite selon au moins l'une des revendications précédentes, **caractérisé par le fait que** les deux éléments de panneau (11, 21) sont formés de films transparents et/ou flexibles.

10. Elément de panneau composite selon au moins une des revendications précédentes, **caractérisé en ce que** les microcavités (2) ont une hauteur comprise entre 100 nm et 20 µm, de préférence entre 1 µm et 10 µm et de manière particulièrement préférée entre 3 µm et 8 µm.

11. Elément de panneau composite selon au moins une des revendications précédentes, **caractérisé en ce que** les microcavités (2) ont une profondeur comprise entre 20 µm et 1 mm, de préférence entre 50 µm et 500 µm et de manière particulièrement préférée entre 100 µm et 300 µm.

12. Fenêtre avec
- une vitre (9) et
- un élément de panneau composite (1) appliqué à celui-ci selon l'une des revendications précédentes.

13. Procédé de fabrication d'un élément de panneau composite (1) pour guider la lumière, comprenant
- fournir un premier élément de panneau (11) avec une première microstructure (12) sur une première surface intérieure (13), dans laquelle la première microstructure (12) comprend des élévations (14) et des évidements (15),
- fournir un deuxième élément de panneau (21) ayant une deuxième microstructure (22) sur une deuxième surface intérieure (23), dans lequel la deuxième microstructure (22) comprend des élévations (24) et des évidements (25),
- disposition des éléments du panneau (11, 21) l'un par rapport à l'autre, de sorte que la première et la deuxième surface intérieure (13, 23) se font face et que la première et la deuxième microstructure (12, 22) sont disposées de manière à s'emboîter, de sorte que des microcavités internes (2) sont formées entre les microstructures (12, 22),
- où la fixation des éléments de panneau l'un à l'autre (11, 21) est assurée par des sections d'encliquetage correspondantes (17, 27) de la première et de la deuxième microstructure (12, 22),
- dans lequel les sections d'encliquetage (17, 27) des premier et deuxième éléments de panneau (11, 21) sont chacune formées d'une paire correspondante d'un logement d'encliquetage (5) et d'un élément d'encliquetage (6).
